# FASCICULE DE BREVET EUROPEEN

(11) **EP 1 430 241 B1**
(45) Date de publication et mention de la délivrance du brevet: **06.12.2006**
(21) Numéro de dépôt: 02783209.6
(22) Date de dépôt: 25.09.2002
(51) Int. Cl.: F16J 15/08, F16J 15/12

(54) **JOINT DE CULASSE COMPRENANT UN STOPPEUR BORD A BORD LIE PAR AGRAFAGE**
ZYLINDERKOPFDICHTUNG MIT EINEM DURCH HEFTEN VERBUNDENEN, SICH VON RAND ZU RAND ERSTRECKENDEN ANSCHLAGRING
CYLINDER-HEAD GASKET COMPRISING AN EDGE-TO-EDGE STOP RING WHICH IS CONNECTED BY MEANS OF STAPLING

(30) Priorité: 28.09.2001 FR 0112492
(43) Date de publication de la demande: 23.06.2004
(73) Titulaire: Carl Freudenberg KG, 69469 Weinheim (DE)
(72) Inventeur: PEPIN, Frédéric, Jean-Michel, F-37300 Joué-lès-Tours (FR)
(86) Numéro de dépôt international: PCT/FR2002/003270
(87) Numéro de publication internationale: WO 2003/029703

(56) Documents cités:
- DE-A- 4 308 726
- US-A- 5 685 547
- US-A- 5 713 580
- US-A- 5 873 578
- US-A- 5 927 724

## Description

La présente invention se rapporte à un joint de culasse comprenant un stoppeur bord à bord, plus particulièrement caractérisé par le mode de fixation dudit stoppeur au reste du joint.

Selon un mode de réalisation, un joint de culasse comprend deux tôles avec au moins une ouverture correspondant à l'ouverture d'une chambre de combustion, au moins l'une des deux tôles, et de préférence les deux, comportant une nervure ménagée autour de chaque ouverture, à distance du bord de ladite ouverture, lesdites nervures étant déformées vers l'intérieur du joint.

En complément, le joint comprend une tôle support intermédiaire interposée entre les deux tôles extérieures, au droit des nervures, ainsi qu'un stoppeur, sous forme d'une cale annulaire, ayant un diamètre intérieur correspondant sensiblement à celui de l'ouverture et un diamètre extérieur inférieur à celui des nervures, ledit stoppeur étant disposé bord à bord, dans le prolongement de la tôle support.

La liaison entre le stoppeur et la tôle support est généralement réalisée par soudage, collage ou analogue. La demande de brevet FR-OO.12669 au nom du demandeur propose un procédé de fixation du stoppeur sur sa tôle support par expansion radiale dudit stoppeur. Toutefois, cette solution est difficile à mettre en oeuvre car elle génère une déformation sur l'ensemble du stoppeur.

La présente invention vise à proposer un nouveau joint de culasse comprenant un stoppeur bord à bord, avec une nouvelle liaison stoppeur/tôle support procurant un meilleur maintien dudit stoppeur, ne générant pas de contraintes trop importantes au niveau de ce dernier.

A cet effet, l'invention a pour objet un joint de culasse avec au moins une ouverture correspondant à une chambre de combustion, comprenant d'une part, au moins une tôle dite extérieure comportant une nervure circulaire, entourant l'ouverture, ménagée à distance du bord de ladite ouverture, et d'autre part, une tôle support disposée contre la face de la tôle extérieure portant en saillie la nervure, comprenant une ouverture de diamètre supérieure à l'ouverture de la tôle extérieure afin de définir un espace dans lequel est disposé un stoppeur sous forme d'une cale annulaire de diamètre intérieur correspondant à celui de l'ouverture et de diamètre extérieur sensiblement ajusté à l'ouverture de la tôle support de manière à être disposé bord à bord, caractérisé en ce que la liaison entre le stoppeur et la tôle support comprend au moins une partie en saillie, ménagée indifféremment sur l'un des deux éléments, venant se loger dans une découpe en creux de formes sensiblement coopérantes ménagées au niveau de l'autre élément, ladite partie en saillie ayant des formes en contre-dépouille, ainsi qu'au moins une déformation plastique à proximité de ladite ou desdites partie(s) en saillie de manière à engendrer une légère expansion susceptible d'assurer la liaison entre lesdits deux éléments par coincement.

Grâce aux formes en contre-dépouille, les efforts de coincement ne s'exercent que très localement et n'engendrent pas de déformations excessives de la tôle.

D'autres caractéristiques et avantages ressortiront de la description qui va suivre du dispositif de l'invention, description donnée à titre d'exemple uniquement, en regard des dessins annexés sur lesquels:
- la figure 1 est une vue en coupe d'une partie d'un joint de culasse dans un plan parallèle aux tôles selon un premier mode de réalisation simplifié,
- la figure 2 est une vue en coupe d'une partie d'un joint de culasse dans un plan parallèle aux tôles selon un deuxième mode de réalisation,
- la figure 3 est une vue en coupe d'une partie d'un joint de culasse dans un plan parallèle aux tôles selon un troisième mode de réalisation,
- la figure 4 est une vue en coupe d'une partie d'un joint de culasse dans un plan parallèle aux tôles selon un mode de réalisation préféré,
- les figure 5A et 5B des coupes transversales selon deux rayons différents du joint de culasse de la figure 4, et
- les figures 6A à 6C sont des vues de dessus de variantes de réalisation.

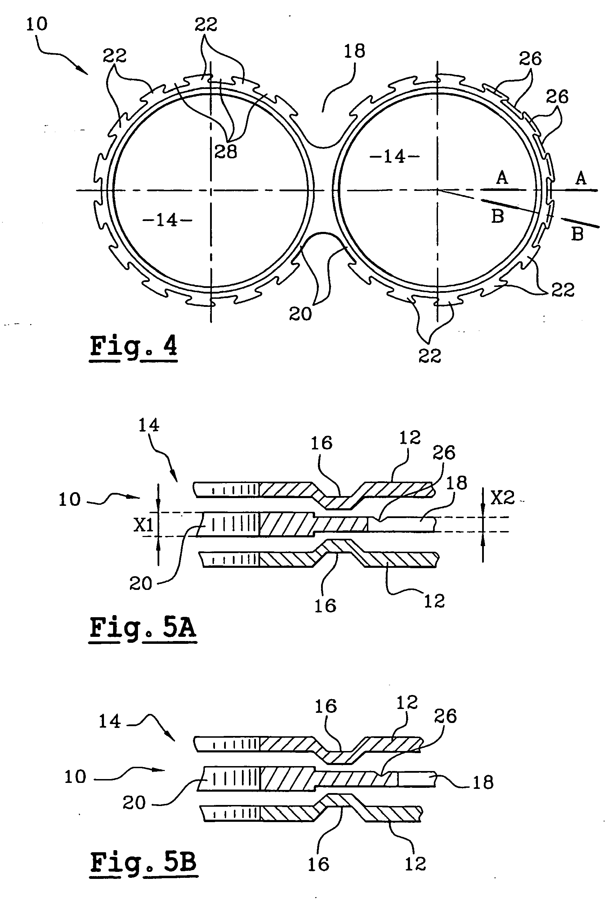

Sur les figures, on a représenté un joint de culasse 10 comprenant au moins une tôle extérieure 12, et de préférence deux comme illustré sur les figures 5A et 5B, avec au moins une ouverture 14 correspondant à une chambre à combustion d'un bloc moteur, au moins l'une des tôles extérieures 12, et de préférence les deux, comportant une nervure 16 circulaire, entourant l'ouverture 14, ménagée à une distance du bord de l'ouverture 14, la ou les nervures étant déformée(s) vers l'intérieur du joint.

De façon connue, une tôle support intermédiaire 18 est interposée entre les tôles extérieures 12. Dans le cas où le joint ne comporte qu'une seule tôle extérieure 12, la tôle support 18 est disposée contre la face de la tôle extérieure 12 sur laquelle est ménagée en saillie la nervure 16.

La tôle support comprend une ouverture concentrique à l'ouverture 14 de la ou des tôles extérieures 12, de diamètre supérieur à l'ouverture 14 afin de définir un espace dans lequel est disposé un stoppeur 20, sous forme d'une cale annulaire, de diamètre intérieur correspondant à celui de l'ouverture 14 et de diamètre extérieur sensiblement ajusté à l'ouverture de la tôle support.

Avantageusement, ce stoppeur comprend au moins une zone d'épaisseur X1 supérieure à l'épaisseur X2 de la tôle support afin de constituer un limiteur d'écrasement des nervures, une première barrière d'étanchéité et de permettre la mise en voûte d'au moins une tôle extérieure de manière à limiter les débattements de cette dernière en fonctionnement.

Selon les cas, le diamètre extérieur du stoppeur 20 peut être inférieur à celui des nervures 16 si bien que la tôle support 1 8 est intercalée entre les nervures 16 ou bien être supérieur à celui des nervures 16 si bien qu'une zone dudit stoppeur d'épaisseur inférieur à X1 est intercalée entre les nervures 16 comme illustré par les figures 5A et 5B.

Selon l'invention, comme illustré par les figures, la liaison entre le stoppeur 20 et la tôle support intermédiaire 18 est obtenue par au moins une partie en saillie 22, ménagée indifféremment sur l'un des deux éléments, par exemple la tôle support 18, venant se loger dans une découpe en creux de formes sensiblement coopérantes ménagées au niveau de l'autre élément, par exemple le stoppeur 20, ladite partie en saillie ayant des formes 24 en contre-dépouille, ainsi que par au moins une déformation plastique 26 à proximité de ladite partie en saillie 22 de manière à engendrer une légère expansion susceptible d'assurer la liaison entre lesdits deux éléments par coincement.

Par forme en contre-dépouille, on entend que la partie en saillie a au niveau de son pied (zone de jonction avec l'élément qui la supporte) une section réduite.

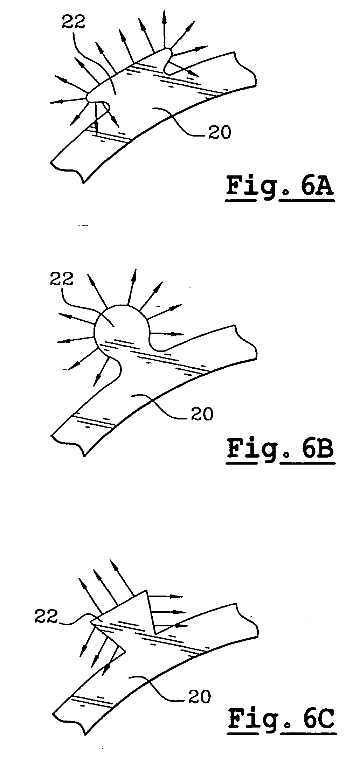

Selon l'invention, comme on peut le voir sur les figures 6A à 6C, lors de la déformation plastique, les efforts de coincement ne s'exercent que localement et n'engendrent pas de déformations excessives de la tôle et/ou du stoppeur.

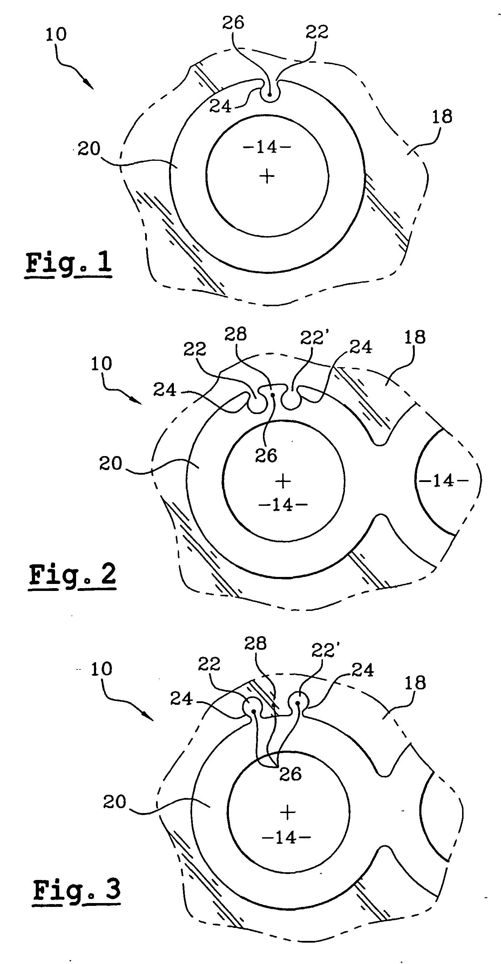

Sur les figures 1 et 2, la ou les parties en saillie 22 sont réalisées au niveau de la tôle intermédiaire 18.

La figure 3 illustre un mode de réalisation dans lequel, la ou les parties en saillie 22 sont réalisées au niveau du stoppeur 20.

Selon les cas, la partie en saillie 22 se présente sous forme d'une encoche avec des bords arrondies ou comprend un pourtour présentant une succession de segments. Les figures 6A et 6B illustrent de manière non exhaustive différentes variantes.

De préférence, la déformation plastique 26, visible sur les figures 5A et 5B, est obtenue par poinçonnage au niveau de la partie en saillie, ce dernier pouvant être de type ponctuel, linéaire ou surfacique.

Selon un deuxième mode de réalisation, la liaison comprend au moins deux parties en saillie 22, 22' ménagées sur un premier élément, indifféremment la tôle support 18 ou le stoppeur 20, et de préférence la partie intermédiaire 28 du second élément, le stoppeur 20 ou la tôle support 18, disposée entre les deux parties subit une déformation plastique de manière à générer une expansion radiale susceptible d'assurer la liaison des deux éléments par coincement. Selon les cas, les deux parties en saillie 22, 22' comprennent des formes en contre-dépouille ou seulement la partie intermédiaire 28.

En variante, la ou les déformations plastiques 26 sont produites au niveau des parties en saillie.

Dans le cas d'une pluralité de partie en saillie 22, au moins une déformations plastiques et de préférence plusieurs peuvent être réalisées indifféremment sur les parties en saillie 22 et/ou sur les parties intermédiaires 28.

La figure 4 illustre un mode de réalisation préféré pour lequel la ou les parties en saillie comportent des formes particulières.

Dans ce cas, la ou les parties en saillie 22 ont sensiblement une forme oblongue avec un rattachement sous forme d'isthme. Cette forme permet d'augmenter la surface de contact entre le stoppeur 20 et la tôle support 18, et d'obtenir par déformation plastique une liaison plus résistante.

Quelle que soit la forme des parties en saillie, ces dernières sont de préférence régulièrement espacées et les parties intermédiaires 28 ont un profil sensiblement identique à celui des parties 22 en saillie.

Bien entendu, l'invention n'est évidemment pas limitée au mode de réalisation représenté et décrit ci-dessus, mais en couvre au contraire toutes les variantes, notamment en ce qui concerne les matériaux utilisés, les formes de la partie active du stoppeur ainsi que le nombre de tôles extérieures.

De plus, les différentes tôles 12, 18 ainsi que le stoppeur 20 peuvent être chacun constitués d'une seule tôle ou d'un empilage de tôles.

Par ailleurs, ces moyens de liaison entre le stoppeur et la tôle support peuvent aussi bien s'appliquer à un stoppeur unique qu'à un groupe de stoppeur relié entre eux part un isthme dans le cas d'un joint à plusieurs cylindre.

Enfin, la zone de contact entre le stoppeur et la tôle support intermédiaire peut comprendre un orifice pour le passage de fluide, par exemple de l'eau ou de l'huile.

## Revendications

1. Joint de culasse avec au moins une ouverture (14) correspondant à une chambre de combustion, comprenant d'une part, au moins une tôle (12) dite extérieure comportant une nervure (16) circulaire, entourant l'ouverture (14), ménagée à distance du bord de ladite ouverture (14), et d'autre part, une tôle support (18) disposée contre la face de la tôle (12) extérieure portant en saillie la nervure (16), comprenant une ouverture de diamètre supérieure à l'ouverture (14) de la tôle extérieure afin de définir un espace dans lequel est disposé un stoppeur (20) sous forme d'une cale annulaire de diamètre intérieur correspondant à celui de l'ouverture (14) et de diamètre extérieur sensiblement ajusté à l'ouverture de la tôle support de manière à être disposé bord à bord, **caractérisé en ce que** la liaison entre le stoppeur (20) et la tôle support (18) comprend au moins une partie en saillie (22), ménagée indifféremment sur l'un des deux éléments, venant se loger dans une découpe en creux de formes sensiblement coopérantes ménagées au niveau de l'autre élément, la ou les partie(s) en saillie ayant des formes en contre-dépouille, ainsi qu'au moins une déformation plastique (26) à proximité de ladite ou desdites partie(s) en saillie (22) de manière à engendrer une légère expansion susceptible d'assurer la liaison entre lesdits deux éléments par coincement.

2. Joint de culasse selon la revendication 1, **caractérisé en ce que** la déformation plastique est réalisée au niveau de la partie en saillie (22).

3. Joint de culasse selon la revendication 1, **caractérisé en ce que** la liaison entre le stoppeur et la tôle support comprend au moins deux parties en saillie (22, 22') ménagées sur un premier élément, ainsi qu'une déformation plastique au niveau de la partie intermédiaire (28) du second élément disposée entre les deux parties en saillie de manière à générer une expansion radiale susceptible d'assurer la liaison des deux éléments par coincement.

4. Joint de culasse selon la revendication 3, **caractérisé en que** la ou les déformations plastiques sont réalisées également au niveau de la ou des parties en saillie.

5. Joint de culasse selon l'une quelconque des revendications 1 à 4, **caractérisé en ce que** la ou les déformations plastiques sont obtenues par poinçonnage.

6. Joint de culasse selon l'une quelconque des revendications 1 à 5, **caractérisé en ce que** les parties en saillie (22) sont régulièrement espacées.

7. Joint de culasse selon la revendication 6, **caractérisé en ce que** les parties intermédiaires (28) ont un profil sensiblement identique à celui des parties (22) en saillie.

8. Joint de culasse selon l'une quelconque des revendications 1 à 7, **caractérisé en ce que** la ou les parties en saillie (22) ont une forme oblongue, la partie en saillie ayant au niveau de son pied une section plus faible qu'au niveau de son extrémité

## Claims

1. Cylinder-head gasket with at least one opening (14) corresponding to a combustion chamber, comprising, on the one hand, at least one metal plate (12) called the exterior plate including a circular rib (16), surrounding the opening (14), arranged at some distance from the edge of the said opening (14), and, on the other hand, a support plate (18) placed on the surface of the exterior plate (12) from which the rib (16) projects, comprising an opening with a diameter greater than that of the opening (14) in the exterior plate in order to define a space in which is arranged a stop ring (20) in the form of an annular shim with an internal diameter corresponding to that of the opening (14) and with an external diameter generally machined to fit the opening in the support plate so as to be arranged edge-to-edge, **characterized in that** the connection between the stop ring (20) and the support plate (18) comprises at least one projecting portion (22), arranged on either one of the two elements, housed in a hollow slot with generally cooperating shapes arranged in the other element, the projecting portion(s) having re-entrant angles, as well as at least one plastic deformation (26) near the said projecting portion(s) (22) so as to produce a slight expansion which could provide the connection between the said two elements by clamping.

2. Cylinder-head gasket according to Claim 1, **characterized in that** the plastic deformation is made in the projecting portion (22).

3. Cylinder-head gasket according to Claim 1, **characterized in that** the connection between the stop ring and the support plate comprises at least two projecting portions (22, 22') arranged on a first element, as well as a plastic deformation in the intermediate portion (28) of the second element placed between the two projecting portions so as to produce a radial expansion which could provide the connection of the two elements by clamping.

4. Cylinder-head gasket according to Claim 3, **characterized in that** the plastic deformation(s) are also made in the projecting portion(s).

5. Cylinder-head gasket according to any one of Claims 1 to 4, **characterized in that** the plastic deformation(s) are obtained by stamping.

6. Cylinder-head gasket according to any one of Claims 1 to 5, **characterized in that** the projecting portions (22) are spaced at regular intervals.

7. Cylinder-head gasket according to Claim 6, **characterized in that** the intermediate portions (28) have a profile generally identical to that of the projecting portions (22).

8. Cylinder-head gasket according to any one of Claims 1 to 7, **characterized in that** the projecting portion(s) (22) have an oblong shape, the projecting portion having at its base a smaller section than at its end.

## Patentansprüche

1. Zylinderkopfdichtung mit mindestens einer Öffnung (14), die einem Verbrennungsraum entspricht, die einerseits mindestens ein so genanntes äußeres Blech (12), das eine die Öffnung (14) umgebende kreisförmige Rippe (16) aufweist, die in Abstand zum Rand der Öffnung (14) ausgebildet ist, und andererseits ein Stützblech (18) aufweist, das gegen die Fläche des äußeren Blechs (12) angeordnet ist, aus der die Rippe (16) vorspringt, mit einer Öffnung mit einem größeren Durchmesser als die Öffnung (14) des äußeren Blechs, um einen Raum zu definieren, in dem ein Stopper (20) in Form eines Ringkeils mit einem Innendurchmesser angeordnet ist, der demjenigen der Öffnung (14) entspricht, und mit einem Außendurchmesser, der im Wesentlichen an die Öffnung des Stützblechs angepasst ist, um stumpf angeordnet zu werden, **dadurch gekennzeichnet, dass** die Verbindung zwischen dem Stopper (20) und dem Stützblech (18) mindestens einen vorstehenden Bereich (22), der beliebig auf einem der beiden Elemente ausgebildet ist und sich in einen hohlen Ausschnitt von im Wesentlichen kooperierender Form einfügt, der in Höhe des anderen Elements ausgebildet ist, wobei der oder die vorstehende(n) Bereich(e) Formen mit Hinterschneidung haben, sowie mindestens eine plastische Verformung (26) in der Nähe des vorstehenden Bereichs oder der vorstehenden Bereiche (22) aufweist, um eine leichte Ausdehnung zu erzeugen, die die Verbindung zwischen den beiden Elementen durch Klemmwirkung gewährleisten kann.

2. Zylinderkopfdichtung nach Anspruch 1, **dadurch gekennzeichnet, dass** die plastische Verformung in Höhe des vorstehenden Bereichs (22) durchgeführt wird.

3. Zylinderkopfdichtung nach Anspruch 1, **dadurch gekennzeichnet, dass** die Verbindung zwischen dem Stopper und dem Stützblech mindestens zwei vorstehende Bereiche (22, 22'), die auf einem ersten Element ausgebildet sind, sowie eine plastische Verformung in Höhe des Zwischenbereichs (28) des zweiten Elements aufweist, der zwischen den beiden vorstehenden Bereichen angeordnet ist, um eine radiale Ausdehnung zu erzeugen, die die Verbindung der beiden Elemente durch Klemmwirkung gewährleisten kann.

4. Zylinderkopfdichtung nach Anspruch 3, **dadurch gekennzeichnet, dass** die plastische Verformung oder Verformungen ebenfalls in Höhe des vorstehenden Bereichs oder der vorstehenden Bereiche durchgeführt werden.

5. Zylinderkopfdichtung nach einem der Ansprüche 1 bis 4, **dadurch gekennzeichnet, dass** die plastische Verformung oder Verformungen durch Lochstanzen erhalten werden.

6. Zylinderkopfdichtung nach einem der Ansprüche 1 bis 5, **dadurch gekennzeichnet, dass** die vorstehenden Bereiche (22) einen gleichmäßigen Abstand haben.

7. Zylinderkopfdichtung nach Anspruch 6, **dadurch gekennzeichnet, dass** die Zwischenbereiche (28) ein Profil haben, das im Wesentlichen gleich demjenigen der vorstehenden Bereiche (22) ist.

8. Zylinderkopfdichtung nach einem der Ansprüche 1 bis 7, **dadurch gekennzeichnet, dass** der vorstehende Bereich oder die vorstehenden Bereiche (22) eine längliche Form haben, wobei der vorstehende Bereich in Höhe seines Fußes einen geringeren Querschnitt hat als in Höhe seines Endes.
